# EUROPÄISCHE PATENTSCHRIFT

(11) **EP 2 156 523 B1**
(45) Veröffentlichungstag und Bekanntmachung des Hinweises auf die Patenterteilung: **26.03.2014**
(21) Anmeldenummer: 08759749.8
(22) Anmeldetag: 19.05.2008
(51) Int. Cl.: H01R 13/629, H01R 13/703

(54) **LEISTUNGSTRENNSCHALTER FÜR EIN KRAFTFAHRZEUG**
CIRCUIT-BREAKER FOR A MOTOR VEHICLE
DISJONCTEUR DE PUISSANCE POUR VÉHICULE À MOTEUR

(30) Priorität: 18.05.2007 DE 102007023273
(43) Veröffentlichungstag der Anmeldung: 24.02.2010
(73) Patentinhaber: Kostal Kontakt Systeme GmbH, 58513 Lüdenscheid (DE)
(72) Erfinder: TITOKIS, Konstantinos, 58507 Lüdenscheid (DE); THURAU, Volker, 44339 Dortmund (DE)
(74) Vertreter: Kerkmann, Detlef
(86) Internationale Anmeldenummer: PCT/EP2008/056125
(87) Internationale Veröffentlichungsnummer: WO 2008/142053

(56) Entgegenhaltungen:
- EP-A- 1 077 512
- EP-A- 1 355 385
- EP-A- 1 689 046
- EP-A- 1 755 200
- US-A1- 2002 173 185
- US-A1- 2005 098 419
- US-A1- 2005 215 122

## Beschreibung

Die vorliegende Erfindung betrifft einen Leistungstrennschalter für ein Kraftfahrzeug, mit einem Verbindergehäuse, welches elektrisch miteinander verbundene Steckkontaktelemente aufweist, und mit einem Steckhülsengehäuse, welches Steckhülsenkontakte aufweist, wobei über einen Betätigungshebel die Steckkontaktelemente mit den Steckhülsenkontakten verbindbar und trennbar sind.

Ein derartiger Leistungstrennschalter ist aus der DE 10 2004 054 360 A1 bekannt. Darüber hinaus beschreibt die Veröffentlichungsschrift der Patentanmeldung US 2005/215122 A1 einen abgeschirmten Steckverbinder, bei dem ein metallenes oder metallisiertes Umgehäuse mit einem Steckhülsengehäuse verbunden ist. Die europäische Patentanmeldung EP-A-1 355 385 offenbart in ihren Figuren 1 und 2, dass mindestens eine innere Fläche eines Umgehäuses eine angeformte Ansteuerkante aufweist, die beim Anfügen eines Verbindergehäuses eine mechanische Blockierung des am Verbindergehäuse angeordneten Betätigungshebel aufhebt.

Der nachfolgend beschriebene Leistungstrennschalter ist vorrangig zum Einsatz in elektrischen Kraftfahrzeugen und in sogenannten Hybridfahrzeugen, die neben einem Verbrennungsmotor auch einen elektrischen Antrieb aufweisen, vorgesehen. Insbesondere zu Wartungszwecken ist es hin und wieder erforderlich, die elektrische Versorgung zu unterbrechen. Da in solchen Fahrzeugen nicht nur hohe Ströme sondern auch relativ hohe Spannungen auftreten, ist es erforderlich den hierzu verwendeten Leistungstrennschalter berührungssicher auszuführen. Wünschenswert ist es zudem, dass von dem Leistungstrennschalter möglichst wenig elektromagnetische Störungen ausgehen.

Daher stellte sich die Aufgabe, einen Leistungstrennschalter zu schaffen, der sich durch einen berührungssicheren elektrischen Aufbau und durch eine hohe elektromagnetische Störfestigkeit auszeichnet. Darüber hinaus soll ein fehlerhaftes Zusammenfügen von Schalterkomponenten möglichst ausgeschlossen sein.

Diese Aufgabe wird erfindungsgemäß dadurch gelöst, dass ein metallenes oder metallisiertes Umgehäuse mit dem Steckhülsengehäuse verbunden ist, dass mindestens eine innere Fläche des Umgehäuses eine angeformte Ansteuerkante aufweist, die beim Anfügen des Verbindergehäuses eine mechanische Blockierung des am Verbindergehäuse angeordneten Betätigungshebels aufhebt, dass der Betätigungshebel ein Zahnrad aufweist oder betätigt, welches mit einer Zahnstange am Steckhülsengehäuse zusammenwirkt, und dass bei einem nicht mit dem Umgehäuse verbundenen Verbindergehäuse zumindest in einer Stellung des Betätigungshebels, ein in eine Zahnlücke des Zahnrads eingreifender Blockierhebel die Bewegbarkeit des Betätigungshebels blockiert.

Im folgenden wird ein Ausführungsbeispiel der Erfindung anhand der Zeichnung dargestellt und näher erläutert. Es zeigen
- Figur 1: einen Leistungstrennschalter mit teilweise verbundenen Gehäuseteilen,
- Figur 2: einen Leistungstrennschalter in einer Explosionsansicht,
- Figur 3: den Leistungstrennschalter mit verbundenen Gehäuseteilen,
- Figur 4: eine vergrößerte Ansicht der Hebelmechanik,
- Figur 5: eine erste Ansicht von Zahnrad und Blockierhebel,
- Figur 6: eine zweite Ansicht von Zahnrad und Blockierhebel,
- Figur 7: einen Entriegelungsstift,
- Figur 8: eine Entriegelungsöffnung.

Der Leistungstrennschalter realisiert Sicherheitsfunktionen im Zusammenhang mit Servicearbeiten am Kraftfahrzeug und ermöglicht die Abschaltung des Batteriepotentials. Bevorzugt werden derartige Leistungstrennschalter in Elektrofahrzeugen und Hybridfahrzeugen eingesetzt, bei denen hohen Strom- und oft auch hohe Spannungswerte berührungssicher zu schalten sind.

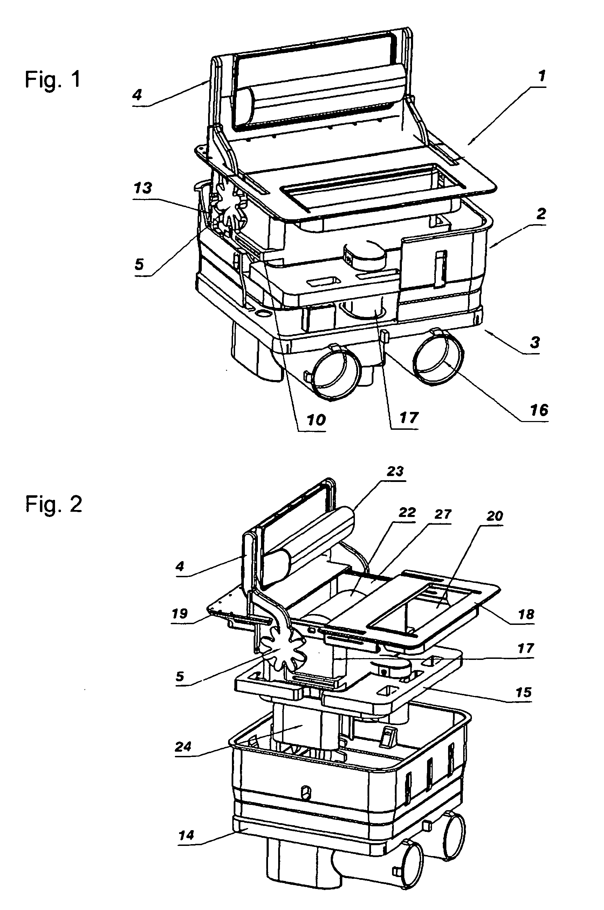

Die Figur 1 zeigt einen Leistungstrennschalter vor dem Verbinden der Schalterkomponenten in einer teilweise geschnittenen Ansicht. In der Figur 2 ist derselbe Leistungstrennschalter in einer Explosionsansicht dargestellt.

Der Leistungstrennschalter besteht aus einem Verbindergehäuse (1), einem Umgehäuse (2) und einem Steckhülsengehäuse (3). Das Steckhülsengehäuse (3) weist, hier nicht im Detail dargestellte, Leistungsanschlüsse (16) auf, über die elektrische Anschlussleitungen mit dem Leistungstrennschalter verbindbar sind. Die Leistungsanschlüsse (16) können hierzu vorzugsweise innerhalb des Steckhülsengehäuses (3) angeordnete Steck-, Schraub- oder Crimpverbinder aufweisen.

Durch das Anfügen des Verbindergehäuses (1) an das Steckhülsengehäuse (3) können die Leistungsanschlüsse (16) elektrisch miteinander verbunden werden. Hierzu weist das Verbindergehäuses (1) intern zwei elektrische Steckkontaktelemente auf, die etwa als für hohe Stromstärken ausgelegte Flachstecker ausgebildet sein können. In der Figur 2 sind Gehäusekörper (24) erkennbar, die die Steckkontaktelemente umgeben. Die Gehäusekörper (24) sind einstückig an eine Grundplatte (15) angeformt, die auf ihrer entgegengesetzt gelegenen Oberfläche eine angeformte Aufnahmekammer (27) für eine elektrische Sicherung (22) aufweist. Die in die Aufnahmekammer (27) eingesetzte Sicherung (22) stellt eine elektrisch leitende Verbindung zwischen den Steckkontaktelementen des Verbindergehäuses (1) her.

In eine Grundplatte (14) des Steckhülsengehäuses (3) sind, in der Zeichnung nicht dargestellte buchsenartige Steckhülsenkontakte eingebracht, in die die Steckkontaktelemente des Verbindergehäuses (1) einsetzbar sind. Die Steckhülsenkontakte stehen in elektrisch leitender Verbindung mit den Leistungsanschlüssen (16).

Durch das Zusammenfügen des Verbindergehäuses (1) mit dem Steckhülsengehäuse (3) werden so die Leistungsanschlüsse (16) über die hergestellte Steckverbindung und die Sicherung (22) elektrisch miteinander verbunden. Entsprechend kann die elektrische Verbindung durch ein Trennen der beiden Gehäuse (1, 3) unterbrochen werden.

Um einen guten Berührschutz zu gewährleisten, ist mit dem Steckhülsengehäuse (3) ein umlaufendes Umgehäuse (2) verbunden, welches angefügt oder angeformt sein kann. Das Umgehäuse (2) ist als ein metallenes oder metallisiertes Gehäuseteil ausgebildet, welches im wesentlichen die Mantelfläche des Leistungstrennschalters bildet und vom Leistungstrennschalter ausgehende elektromagnetische Störungen wirkungsvoll abschirmt.

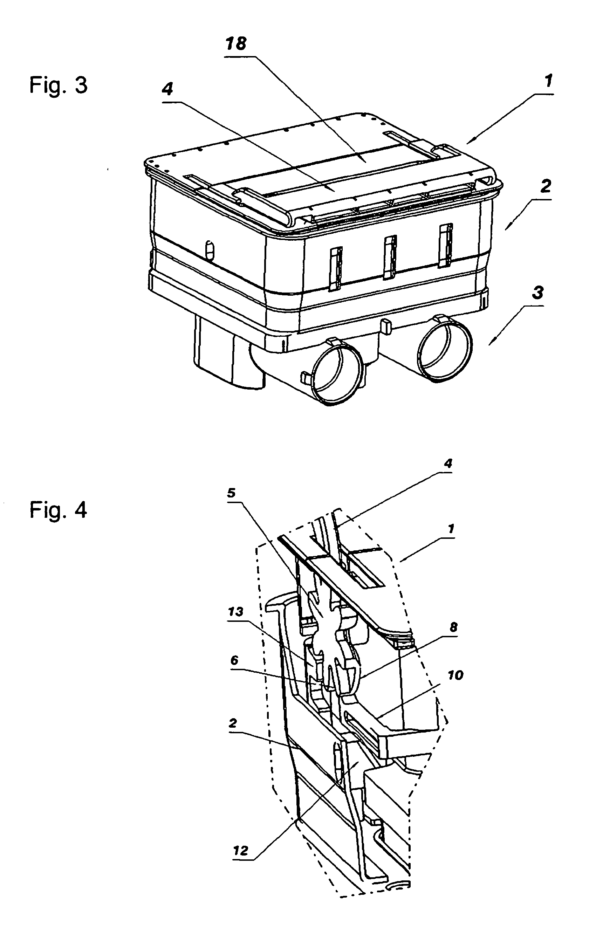

Um die bei Hochlaststeckverbindungen auftretenden relativ hohen Steckkräfte aufzubringen, ist zum Verbinden des Verbindergehäuses (1) mit dem Steckhülsengehäuses (3) eine Hebelmechanik vorgesehen. Diese besteht aus einem bügelartigen Betätigungshebel (4), der an zwei Stellen am Verbindergehäuse (1) drehbar gelagert ist. Der Betätigungshebel (4) bildet in den Bereichen der Lagerstellen jeweils ein einstückig angeformtes Zahnrad (5) aus. Das Zahnrad (5) kann durch Anfügen des Verbindergehäuses (1) an das Steckhülsengehäuse (3) mit einer Zahnstange (13), die an das Steckhülsengehäuse (3) angeformt ist und sich in Richtung auf das Verbindergehäuse erstreckt, in Eingriff gebracht werden. Durch Umlegen des Betätigungshebels (4) wird das Zahnrad (5) um etwa eine Vierteldrehung im Uhrzeigersinn mitgedreht, und bewegt sich dadurch zusammen mit dem gesamten Verbindergehäuse translatorisch in Richtung auf das Steckhülsengehäuse. Ist der Betätigungshebel (4) vollständig umgelegt, wie in der Figur 3 dargestellt, so erreicht damit auch das Verbindergehäuse (1) seine Endposition gegenüber dem Steckhülsengehäuse (3), in der die Steckkontaktelemente des Verbindergehäuses (1) vollständig mit den Steckhülsenkontakten in Eingriff und damit in elektrisch leitender Verbindung sind.

Die Anordnung des Zahnrads (5) ist in den Figuren 4 bis 6 vergrößert dargestellt. Anhand dieser Figuren soll die Funktionsweise der Hebelmechanik weiter verdeutlicht werden soll.

Die Figur 4 zeigt einen Abschnitt des Betätigungshebels (4), der sich in seiner Ausgangsstellung befindet. Das Zahnrad (5) liegt vor der Oberkante der Zahnstange (13), mit der das Zahnrad (5) durch eine Bewegung des Betätigungshebels (4) in Eingriff kommen soll. Des weiteren zeigt die Figur 4 einen einarmigen, am Verbindergehäuse (1) angeformten Blockierhebel (10), dessen freier Endabschnitt in eine Zahnlücke (6) des Zahnrads (5) eingreift. Hierdurch ist die Bewegbarkeit des einstückig mit dem Zahnrad (5) verbundenen Betätigungshebels (4) blockiert.

Außerdem ist in der Figur 4 eine Ansteuerkante (12) erkennbar, die an einer Innenseite des Umgehäuses (2) angeformt ist. Wird das Verbindergehäuse (1) nun in Richtung auf das Umgehäuse (2) verschoben, so drückt die, sich nach unten verbreiternde Ansteuerkante (12) gegen die Längsseite des Blockierhebels (10) und schiebt damit den das Zahnrad (5) blockierenden Endabschnitt des Blockierhebels (10) aus der Drehebene des Zahnrads (5) heraus. Die Blockierung des Zahnrads (5) und damit zugleich die Blockierung des Betätigungshebels (4) ist damit aufgehoben.

Der Betätigungshebel (4) kann nun umgelegt werden, wobei das Zahnrad (5) mit der Zahnstange (13) des Steckhülsengehäuses (3) in Eingriff kommt und so das Verbindergehäuse (1) in Richtung auf das Steckhülsengehäuse (3) verschiebt, bis die Steckkontaktelemente mit den Steckhülsenkontakten verbunden sind.

Die anfängliche Arretierung des Zahnrads (5) durch den Blockierhebel (10) verhindert, dass das Verbindergehäuse (1) und das Steckhülsengehäuse (3) zusammenfügbar sind, wenn das Umgehäuse (2) nicht korrekt montiert ist. Hierdurch wird das Herstellen der durch den Leistungstrennschalter vermittelten elektrischen Verbindung verhindert, wenn wegen eines fehlenden oder falsch positionierten Umgehäuses (2) kein ausreichender Berührungsschutz und keine wirksame Abschirmung elektromagnetischer Felder gegeben ist.

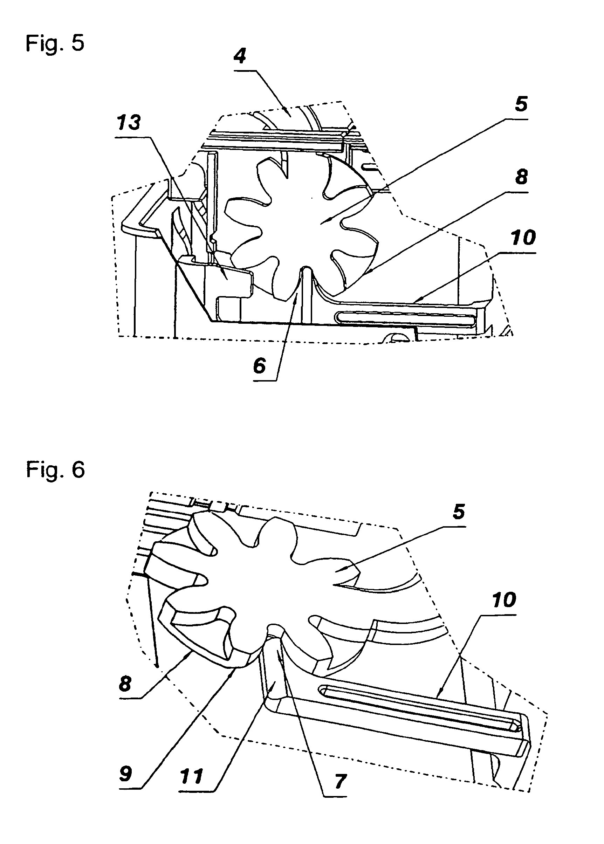

Die Figur 5 zeigt eine weitere Ansicht des Betätigungshebels (10) in seiner Ausgangslage - erkennbar an der Abgangsrichtung des am Zahnrad (5) angeformten Betätigungshebels (4) - in der der Betätigungshebel (4) durch den in eine Zahnlücke (6) eingreifenden Blockierhebel (10) blockiert ist.

In der Figur 6 ist der Betätigungshebel (4) und das Zahnrad (5), nach erfolgtem Umlegen des Betätigungshebels (4), in seiner Endposition abgebildet. Die Abgangsrichtung des Betätigungshebels (4) ist hierbei gegenüber der Ausgangsstellung um etwa 90° im Uhrzeigersinn gedreht. Der Endabschnitt des Blockierhebels (10) ist hier wiederum in eine Zahnlücke (7) eingerastet. Dies ist möglich, da in dieser Endposition des Verbindergehäuses (1) der Blockierhebel (10) bereits über die Ansteuerkante (12) des Umgehäuses (2) (siehe Figur 4) hinweg bewegt und entsprechend wieder in seiner Ursprungslage zurückgefedert ist.

Damit der Blockierhebel (10) nicht in einer Zwischenposition in eine Zahnlücke einrastet, ist an der Rückseite des Zahnrads (5) ein flächiger Verbindungssteg (8) angeformt, der die Zahnlücken (6, 7) für den Blockierhebel (10) nur von einer Seite des Zahnrads (5) her zugänglich macht. Der Verbindungssteg (8) ist nur für genau zwei Zahnlücken (6, 7), entsprechend der Ausgangs- und die Endstellung des Betätigungshebels (4), unterbrochen. Des weiteren wird zusätzlich durch den Verbindungssteg (8) eine Erhöhung des axialen und radialen Widerstandsmoments und damit eine erhöhte Verwindungssteifigkeit des Zahnrads (5) erzielt. Da die Ansteuerkante (12) den Blockierhebel (10) hinter den Verbindungssteg (8) des Zahnrads (5) drückt, ersichtlich in der Figur 4, kann der Blockierhebel (10) somit nicht in seine Ausgangslage zurückfedern, bevor er die freie Zahnlücke (7) für die Endstellung des Betätigungshebels (4) erreicht.

Die Blockierung des Betätigungshebels in seiner Endstellung ist vorteilhaft, da hierdurch ein versehentliches oder ein selbsttätiges Öffnen des Leistungstrennschalters durch mechanische Einwirkungen, wie beispielsweise Vibrationen der Kraftfahrzeugkarosserie, wirkungsvoll verhindert wird.

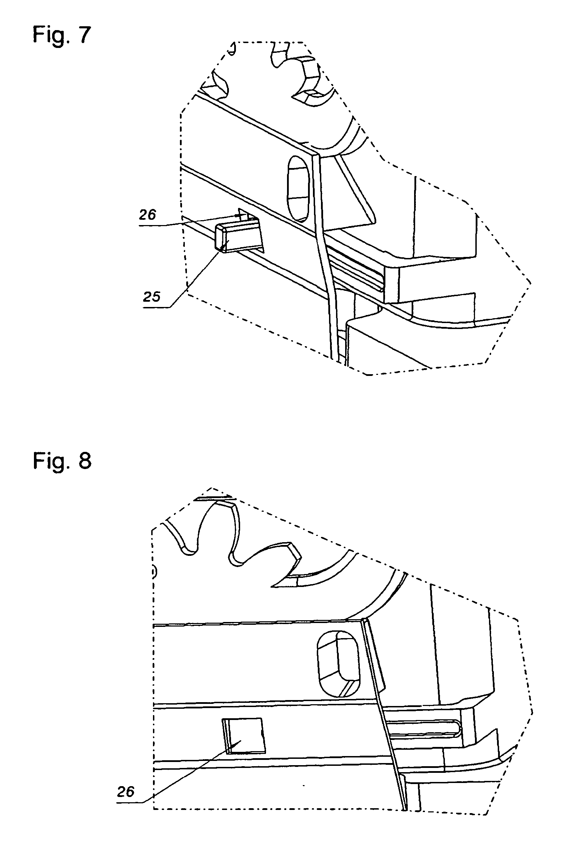

Um den blockierten Betätigungshebel (4) zu entriegeln, kann ein Entriegelungsstift (25) vorgesehen sein, der in der Figur 7 skizziert ist. Der Entriegelungsstift (25) durchragt eine Entriegelungsöffnung (26) in der Wand des Umgehäuses (2) und ist entweder am Umgehäuse (2) gelagert oder am Blockierhebel (10) angeformt.

Montagetechnisch noch einfacher ist es, entsprechend der Darstellung der Figur 8, auf einen Entriegelungsstift zu verzichten und nur eine Entriegelungsöffnung (26) im Umgehäuse (2) vorzusehen. Durch Einführen eines stiftartigen Gegenstands, etwa eines schmalen Schraubendrehers, in die Entriegelungsöffnung (26) kann so der Blockierhebel (10) verschoben werden, um das Zahnrad (5) und damit den Betätigungshebel (4) freizugeben. Angeformte Schrägen (9, 11) am Endabschnitt des Blockierhebels (10) und an der Rückseite des Zahnrads (5), erkennbar in der Figur 6, unterstützen ein Herausgleiten des Blockierhebels (10) aus der Zahnlücke (6).

Der Leistungstrennschalter weist zudem am Verbindergehäuse (1) und am Steckhülsengehäuse (3) miteinander verbindbare Steckkontaktelemente auf, die für kleine elektrische Leistungen ausgelegt sind und die im folgenden zusammenfassend als Signalverbinder (17) bezeichnet werden. Die Gehäusekonturen des Signalverbinders (17) sind in den Figuren 1 und 2 dargestellt.

Der Signalverbinder (17) schließt bei miteinander verbundenen Verbindergehäuse (1) und Steckhülsengehäuse (3) einen elektrischen Signalkreis, der den Verbindungszustand des Leistungstrennschalters signalisiert. Dieses Signal kann dazu vorgesehen sein, ein hier nicht dargestelltes elektronisches oder elektromechanisches Relais anzusteuern, welches in den Leistungskreis des Leistungstrennschalters eingeschaltet ist, so dass der Leistungstrennschalter die Leistungskontakte strom- und spannungsfrei verbinden bzw. trennen kann.

Hierzu ist eine gegenüber dem Leistungskreis nacheilende Schließung des Signalkreises und voreilende Trennung desselben erforderlich. Entsprechend wird bei der Demontage des Leistungstrennschalters zunächst der Signalkreis durch eine rotatorische Bewegung des Betätigungshebels (4) unterbrochen. Durch diese Bewegung und die nachfolgende translatorische Bewegung der Gehäuse (1, 3) zueinander wird danach der Leistungskreis geöffnet. Die Abfolge beim Verbinden der Gehäuse (1,3) erfolgt in umgekehrter Reihenfolge.

Besonders vorteilhaft ist, wenn die Sicherungskammer (27) durch einen Deckel verschließbar ist. Der Deckel besteht entsprechend der Darstellung der Figur 2 aus zwei Deckelteilen (18, 19), die entlang der Zugangsöffnung der Sicherungskammer (27) verschoben werden können. Eines der Deckelteile (18) weist eine Ausnehmung (20) auf, deren Form an eine Anformung (23) am Bügel des Betätigungshebels (4) angepasst ist. Die Anformung (23) kann in der Ausnehmung (20) versenkt werden; allerdings nur dann wenn sich das Deckelteil (18) in einer Position befindet, in der es die Sicherungskammer (27) zumindest weitgehend verschließt. Auch das zweite Deckelteil muss in die Schließposition gebracht werden, da es sonst bei der Steckbewegung des Verbindergehäuses (1) auf die Ränder des Umgehäuses (2) trifft. Dadurch ist ein vollständiges Umlegen des Betätigungshebels (4) und damit ein Verbinden der Leistungs- und des Signalstromkreises erst dann möglich, wenn die Sicherungskammer (27) durch die Deckelteile (18, 19) verschlossen ist.

Ist der Betätigungshebel (4) vollständig umgelegt und die Leistungsanschlüsse (16) folglich elektrisch miteinander verbunden, ist die Anformung des Betätigungshebels (4) in der Ausnehmung des Deckelteils 18 versenkt. Dies ist in der Figur 3 dargestellt ist. Damit ist das Deckelteil 18 aber auch seiner Position festgelegt, so dass das Deckelteil 18 nicht verschiebbar ist, solange der Betätigungshebel (4) umgelegt ist. Damit ist ausgeschlossen, dass jemand bei einem strom- bzw. spannungsführendem Leistungstrennschalter auf das Innere der Sicherungskammer (27) zugreifen kann.

Die Funktionsweise des Leistungstrennschalters sei im folgenden noch einmal kurz zusammengefasst. Die Montage des Leistungstrennschalters erfolgt in zwei Montageschritten. Das bewegliche Teil des Leistungstrennschalters wird in Steckrichtung translatorisch bewegt. Dabei wird der Leistungskreis geschlossen. Der Vorgang wird begrenzt, nachdem der arretierte Betätigungshebel (4) die Zahnstange (13) des festen Teiles des Leistungstrennschalters berührt. Am Ende des ersten Montageschrittes erfolgt die Freigabe zur Rotation des Betätigungshebels (4) über die Anlaufkante (12) im Umgehäuse (2). Durch die anschließende Rotationsbewegung wird zusätzlich der Signalstromkreis geschlossen.

Der auf dem Leistungstrennschalter frei gelagerte Betätigungshebel (4) ist in seinem Anlieferzustand durch den Blockierhebel (10) arretiert. Die konstruktive Auslegung des Blockierhebels (10) erlaubt dessen Auslenkung (Figur 1). Die Aufhebung der Arretierung erfolgt urch eine Ansteuerkante (12) innerhalb des Umgehäuses (2), die den Blockierhebel (3) während des Montagevorganges auslenkt und somit den Betätigungshebel (4) freigibt. Das Vorsehen eines angeformten Verbindungsstegs (8) zwischen den Zahnradflanken verhindert, dass der Blockierhebel (10) während des anschließenden Drehvorganges in seine Ausgangsposition zurückschwenken kann.

Durch die Arretierung des Betätigungshebels (4) und durch die zwingend erforderliche Freigabe durch die Ansteuerkante (12), erfolgt eine Abfrage auf das Vorhandensein des Umgehäuses (2).

Die endgültige Montage des Leistungstrennschalters wird durch die anschließende Drehbewegung vollzogen. Dabei kommt es zum Ineinandergreifen des Zahnrads (5) am Betätigungshebel (4) mit der Zahnstange (13) des Steckhülsengehäuses (3). Nach Beendigung des Drehvorganges schwenkt der Blockierhebel (10) in seine Ausgangsstellung zurück. Somit wird der Blockierhebel (10) nur während des Montagevorganges belastet.

### Bezugszeichen

- 1: Verbindergehäuse
- 2: Umgehäuse
- 3: Steckhülsengehäuse
- 4: Betätigungshebel
- 5: Zahnrad
- 6: Zahnlücke
- 7: Zahnlücke
- 8: Verbindungssteg
- 9: Schräge (am Zahnrad)
- 10: Blockierhebel
- 11: Schräge (am Blockierhebel)
- 12: Ansteuerkante
- 13: Zahnstange
- 14: Grundplatte (am Steckhülsengehäuse)
- 15: Grundplatte(am Verbindergehäuse)
- 16: Leistungsanschlüsse
- 17: Signalverbinder
- 18: erstes Deckelteil
- 19: zweites Deckelteil
- 20: Ausnehmung (im Deckel)
- 21: (Hebeleinschnitt im Deckel)
- 22: Sicherung
- 23: Anformung (an Betätigungshebel)
- 24: Kontaktkörper
- 25: Entriegelungsstift
- 26: Entriegelungsöffnung
- 27: Sicherungskammer

## Patentansprüche

1. Leistungstrennschalter für ein Kraftfahrzeug,
mit einem Verbindergehäuse (1), welches elektrisch miteinander verbundene Steckkontaktelemente aufweist,
und mit einem Steckhülsengehäuse (3), welches Steckhülsenkontakte aufweist,
wobei über einen Betätigungshebel (4) die Steckkontaktelemente mit den Steckhülsenkontakten verbindbar und trennbar sind,
**dadurch gekennzeichnet,**
**dass** ein metallenes oder metallisiertes Umgehäuse (2) mit dem Steckhülsengehäuse (3) verbunden ist,
**dass** mindestens eine innere Fläche des Umgehäuses (2) eine angeformte Ansteuerkante (12) aufweist, die beim Anfügen des Verbindergehäuses (1) eine mechanische Blockierung des am Verbindergehäuse (1) angeordneten Betätigungshebels (4) aufhebt,
**dass** der Betätigungshebel (4) ein Zahnrad (5) aufweist oder betätigt, welches mit einer Zahnstange (13) am Steckhülsengehäuse (1) zusammenwirkt, und
**dass** bei einem nicht mit dem Umgehäuse (2) verbundenen Verbindergehäuse (1) zumindest in einer Stellung des Betätigungshebels, ein in eine Zahnlücke (6, 7) des Zahnrads (5) eingreifender Blockierhebel (10) die Bewegbarkeit des Betätigungshebels (4) blockiert.

2. Leistungstrennschalter nach Anspruch 1, **dadurch gekennzeichnet, dass** die Ansteuerkante (12) des Umgehäuses (2) seitlich auf den Blockierhebel (10) einwirkt und damit den das Zahnrad (5) blockierenden Abschnitt des Blockierhebels (10) aus der Drehebene des Zahnrads (5) herausschiebt.

3. Leistungstrennschalter nach Anspruch 1, **dadurch gekennzeichnet, dass** die Ansteuerkante (12) derart geformt ist, dass sie den Blockierhebel (10) in der Endposition des Verbindergehäuses (1) am Steckhülsengehäuse (3) freigibt, wodurch der Endabschnitt des Blockierhebel (10) verriegelnd in eine Zahnlücke (7) des Zahnrads (5) eingreift.

4. Leistungstrennschalter nach Anspruch 3, **dadurch gekennzeichnet, dass** der Endabschnitt des Blockierhebels (10) und Zahnflanken des Zahnrads (5) jeweils angeformte Schrägen (9, 11) aufweisen, mittels der der Blockierhebel (10) aus der Blockierstellung herausbewegbar ist.

5. Leistungstrennschalter nach Anspruch 3, **dadurch gekennzeichnet, dass** zum Herausbewegen des Blockierhebels (10) aus der Blockierstellung ein seitlich auf den Blockierhebel (10) einwirkender Entriegelungsstift (23) vorgesehen ist.

6. Leistungstrennschalter nach Anspruch 1, **dadurch gekennzeichnet, dass** durch das vollständige Zusammenfügen von Verbindergehäuse (1) und Steckhülsengehäuse (3) weitere elektrische Kontaktelemente miteinander verbunden werden.

## Claims

1. Non-automatic circuit breaker for a motor vehicle,
having a connector body (1) featuring male contact elements that are electrically interconnected,
and having a receptacle (3) featuring push-on contacts,
whereby the male contact elements are capable of being connected to and disconnected from the push-on contacts by way of an operating lever (4),
**characterised in that**
a metal or metallised enclosure (2) is connected to the receptacle (3),
that at least one inner surface of the enclosure (2) has an integrated triggering edge (12) which cancels a mechanical immobilisation of the operating lever (4) located on the connector body (1) upon attaching the connector body (1),
that the operating lever (4) has a cog wheel (5) or operates a cog wheel (5) which interacts with a toothed rack (13) on the connector body (1), and
that an immobilising lever (10) engaging in a tooth space (6, 7) of the toothed wheel (5) immobilises the mobility of the operating lever (4) in at least in one position of the operating lever on a connector body (1) which is not connected to the enclosure (2).

2. Non-automatic circuit breaker according to Claim 1, **characterised in that** the triggering edge (12) of the enclosure (2) impinges laterally on the immobilising lever (10), thus pushing the section of the immobilising lever (10) that immobilises the toothed wheel (5) out of the rotation plane of the toothed wheel (5).

3. Non-automatic circuit breaker according to Claim 1, **characterised in that** the triggering edge (12) is shaped in such a fashion that it releases the immobilising lever (10) in the end position of the connector body (1) on the receptacle (3), as a result of which the end section of the immobilising lever (10) engages in a latching manner in a tooth space (7) of the toothed wheel (5).

4. Non-automatic circuit breaker according to Claim 3, **characterised in that** both the end section of the immobilising lever (10) and tooth flanks of the toothed wheel (5) have integrated bevels (9, 11) by means of which the immobilising lever (10) can be moved out of its immobilising position.

5. Non-automatic circuit breaker according to Claim 3, **characterised in that** an unlocking pin (23) is provided which has a lateral impact on the immobilising lever (10) for the purpose of moving the immobilising lever (10) out of the immobilising position.

6. Non-automatic circuit breaker according to Claim 1, **characterised in that** further electrical contact elements are connected to each other by completely joining together the connector body (1) and the receptacle (3).

## Revendications

1. Disjoncteur de puissance pour un véhicule automobile,
- avec un boîtier de connexion (1) qui comprend des éléments de contact enfichables reliés ensemble électriquement,
- et avec un boîtier à connecteurs femelles (3) qui comprend des contacts femelles,
- sachant que la connexion entre les éléments de contact mâles et les éléments de contact femelles peut être établie et interrompue par l'intermédiaire d'un levier d'actionnement (4),
**caractérisé en ce que**
- une enceinte (2) en métal ou métallisée est relié au boîtier à connecteurs femelles (3),
- au moins sur une face intérieure de l'enceinte (2) est formé un bord de commande (12) qui, lors de l'adjonction du boîtier de connexion (1), annule un blocage mécanique du levier d'actionnement (4) agencé sur ledit boîtier de connexion (1),
- le levier d'actionnement (4) présente ou actionne une roue dentée (5) qui coopère avec une crémaillère (13) sur le connecteur femelles (1), et
- que, lorsque le boîtier de connexion (1) n'est pas relié à l'enceinte (2), un levier de blocage (10), qui s'engage dans un entredent (6, 7) de la roue dentée (5), bloque le mouvement du levier d'actionnement (4) dans au moins une position du levier d'actionnement (4).

2. Disjoncteur de puissance selon la revendication 1, **caractérisé en ce que** le bord de commande (12) de l'enceinte (2) agit latéralement sur le levier de blocage (10) et pousse ainsi hors du plan de rotation de la roue dentée (5) la section dudit levier de blocage (10) qui bloque la roue dentée (5).

3. Disjoncteur de puissance selon la revendication 1, **caractérisé en ce que** le bord de commande (12) est formé de telle sorte qu'il libère le levier de blocage (10) dans la position finale du boîtier de connexion (1) sur le boîtier à connecteur femelles (3), ce en raison de quoi la section d'extrémité dudit levier de blocage (10) verrouille en s"engageant dans un entredent (7) de la roue dentée (5).

4. Disjoncteur de puissance selon la revendication 3, **caractérisé en ce que** la section d'extrémité du levier de blocage (10) et des flancs dentés de la roue dentée (5) présentent chacun des chanfreins façonnés (9, 11), au moyen desquels ledit levier de blocage (10) peut être mû hors de la position de blocage.

5. Disjoncteur de puissance selon la revendication 3, **caractérisé en ce que**, pour libérer le levier de blocage (10) de la position de blocage, est prévue un organe de déverrouillage (23) qui agit sur ledit levier de blocage (10).

6. Disjoncteur de puissance selon la revendication 1, **caractérisé en ce que**, par l'assemblage complet du boîtier de connexion (1) et du boîtier à connecteurs femelles (3), d'autres éléments de contact électriques sont connectés ensemble.
